# EUROPEAN PATENT APPLICATION

(11) **EP 3 151 118 A2**
(43) Date of publication of application: **05.04.2017**
(21) Application number: 16191214.2
(22) Date of filing: 28.09.2016
(51) Int. Cl.: G06F 9/48, G06F 9/455

(54) **INFORMATION PROCESSING APPARATUS**

(30) Priority: 02.10.2015 JP 2015197105; 23.05.2016 JP 2016102437
(71) Applicant: Ricoh Company, Ltd., Tokyo 143-8555 (JP)
(72) Inventor: SENDA, Shigeya, Tokyo, 143-8555 (JP)
(74) Representative: White, Duncan Rohan

(57) **Abstract**

An image processing apparatus (100) includes: a first processing unit (60) configured to operate in a virtual environment; a second processing unit (30) configured to cause the first processing unit (60) to operate; a direct control unit (62) configured to be made to operate by the first processing unit (60), and configured to directly control hardware (21) without having the second processing unit (30) in between; and an alternative control unit (32) configured to be made to operate by the second processing unit (30), and configured to substitutively perform, before the direct control unit (62) is activated, predetermined processing that is supposed to be performed by the direct control unit (62). The direct control unit (62) is configured to succeed, after activated, contents of the predetermined processing that has been performed by the alternative control unit (32).

## Description

### BACKGROUND OF THE INVENTION

### 1. Field of the Invention

The present invention relates to an information processing apparatus.

### 2. Description of the Related Art

Paravirtualization and virtualization have been developed as techniques to execute old operating system (OS) as it is in a new system to inherit existing resources as they are.

Moreover, in recent years, with the development of the cloud-based environment, the paravirtualization or virtualization technique is used as a technique to be a base technique to provide a server environment on a network without depending on hardware. Furthermore, in the field of embedded systems also, introduction of the paravirtualization or virtualization technique has been considered and has been being implemented for the purpose of reusing existing resources or integrating multiple pieces of hardware, to improve system quality of hardware.

An information processing apparatus with paravirtualization or virtualization technique is equipped with a guest OS that operates on a virtual environment, and a host OS that causes the guest OS to operate, and for example, an apparatus in which the guest OS implements a file system on the virtual environment, and the like exists.

### SUMMARY OF THE INVENTION

An image processing apparatus includes a first processing unit, a second processing unit, a direct control unit, and an alternative control unit. The first processing unit is configured to operate in a virtual environment. The second processing unit is configured to cause the first processing unit to operate. The direct control unit is configure to be made to operate by the first processing unit, and configured to directly control hardware without having the second processing unit in between. The alternative control unit is configured to be made to operate by the second processing unit, and configured to substitutively perform, before the direct control unit is activated, predetermined processing that is supposed to be performed by the direct control unit. The direct control unit is configured to succeed, after activated, contents of the predetermined processing that has been performed by the alternative control unit.

According to the present invention, an effect that overhead can be avoided and processing loads can be suppressed is produced.

### BRIEF DESCRIPTION OF THE DRAWINGS

FIG. 1 is a block diagram depicting one example of a hardware configuration of an information processing apparatus of an embodiment;
FIG. 2 is a diagram depicting one example of a configuration of the information processing apparatus of the embodiment;
FIG. 3 is a flowchart depicting a flow of activation processing in the information processing apparatus of the embodiment;
FIG. 4 is a flowchart depicting a flow of initialization processing of an alternative driver at the time of activation of the information processing apparatus of the embodiment;
FIG. 5 is a flowchart depicting a flow of initialization processing of a video driver at the time of activation of the information processing apparatus of the embodiment;
FIG. 6 is a flowchart depicting a flow of energy-saving recovery processing in the information processing apparatus of the embodiment;
FIG. 7 is a flowchart depicting a flow of recovery processing of an alternative driver at the time of recovery from an energy-saving mode of the information processing apparatus of the embodiment; and
FIG. 8 is a flowchart depicting a flow of recovery processing of a video driver at the time of recovery from the energy-saving mode of the information processing apparatus of the embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of an information processing apparatus according to the present invention is explained in detail below with reference to the accompanying drawings. To the information apparatus of the present embodiment, the paravirtualization technique is applied.

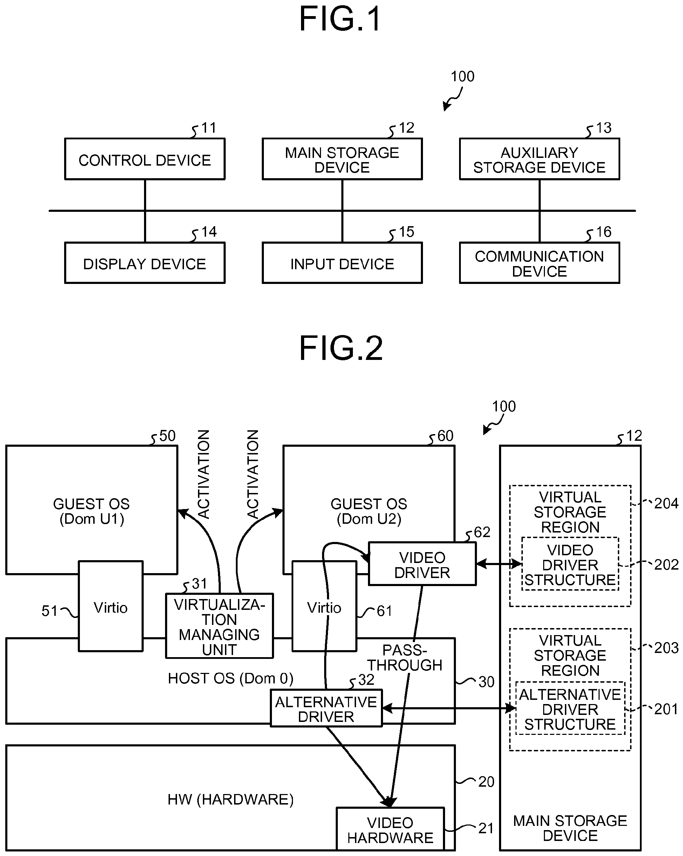

FIG. 1 is a block diagram depicting one example of a hardware configuration of the information processing apparatus of the present embodiment. As depicted in FIG. 1, an information processing apparatus 100 includes a control device 11 such as a central processing unit (CPU) and a graphics processing unit (GPU), a main storage device 12 such as a read-only memory (ROM) and random access memory (RAM), an auxiliary storage device 13 such as a hard disk driver (HDD) and a solid state drive (SSD), a display device 14 such as a display, an input device 15 such as a mouse, a keyboard, a touch panel, and a key switch, and a communication device 16 such as a communication interface, and has a hardware configuration using an ordinary computer.

However, the hardware configuration of the information processing apparatus 100 is not limited thereto, and an integrated circuit (IC), an application specific integrated circuit (ASIC), and various kinds of sensors can be added thereto.

The information processing apparatus 100 can be, for example, a personal computer (PC), a smartphone, a tablet terminal, a wearable terminal, an image forming apparatus, a projector, videoconference equipment, an electronic blackboard, a fluorescent light, a camera, an air conditioner, a refrigerator, a vending machine, and industrial devices. The image forming apparatus can be, for example, a printer device, a copier, a multifunction peripheral, a scanner device, a facsimile device, or the like. The multifunction peripheral includes at least two functions of a copying function, a printing function, a scanner function, and a facsimile function.

FIG. 2 depicts one example of a configuration of the information processing apparatus of the present embodiment. As depicted in FIG. 2, the information processing apparatus 100 includes hardware 200 (HW) having the configuration depicted in FIG. 1 and the like, a host OS 30, a guest OS 50, a guest OS 60, Virtios 51 and 61, and the main storage device 12 depicted in FIG. 12, as main components. The host OS 30 the guest OSes 50 and 60, and the Virtios 51 and 61 can be implemented, for example, by the control device 11 and the main storage device 12. The host OS 30 corresponds to a second processing unit, and the guest OS 60 corresponds to a first processing unit.

The host OS 30 (Dom0) is a base OS in the information processing apparatus 100, and causes the guest OSes 50 and 60 to operate. Specifically, the host OS 30 causes a virtual machine (VM) to operate, the virtual machine (VM) being software to build a virtual environment for causing the guest OSes 50 and 60 to operate therein. For example, the host OS 30 is LINUX (registered trademark), or the like.

The guest OS 50 (DomU1) and the guest OS 60 (DomU2) are OSes that operate in a virtual environment in the information processing apparatus 100, and are made to operate by the host OS 30. The virtual environment is environment that is different from a physical environment and is virtual, and is, in the present embodiment, a computer environment that is virtually build by the VM that operates on the host OS 30.

The Virtios 51 and 61 are standardized virtualization driver groups that operate in a virtual environment. In the present embodiment, the Virtios 51 and 61 serve as interfaces that enable inter-VM communication among the host OS 30 and the guest OSes 50 and 60. However, not limited thereto, for example, when Xen is used as the VM, XenSocket can be used as an interface that enables inter-VM communication, or an interface originally provided by a vender can be used as an interface that enables inter-VM communication.

As for the HW 20, most modules are controlled by the host OS 30 through drivers corresponding to respective modules. Moreover, as depicted in FIG. 2, the HW 20 includes video hardware 21. The video hardware 21 is directly controlled (passed through) by the guest OS 60 without having the host OS 30 in between.

On the other hand, the guest OS 60 includes a video driver 62. The video driver 62 operates on the guest OS 60, and directly controls (passes through) a part of the hardware (the video hardware 21 in the example of the present embodiment) of the information processing apparatus 100 without having the host OS 30 in between. The video driver 62 corresponds to a direct control unit.

Furthermore, as depicted in FIG. 2, the host OS 30 includes a virtualization managing unit 31 and an alternative driver 32. The virtualization managing unit 31 is to manage virtualization in the information processing apparatus 100, and, for example, activates the gust OSes 50 and 60 after the host OS 30 is completely activated, as the management (refer to arrows in FIG. 2).

The alternative driver 32 (DOM0 driver) is a driver for hardware (the video hardware 21 in this example) that is directly controlled (passed through) by the guest OS 60 without having the host OS 30 in between. Although basically, the video hardware 21 is directly controlled by the video driver 62 of the guest OS 60 without using the host OS 30, the alternative driver 32 of the present embodiment takes care of predetermined processing that is supposed to be performed by the video driver 62 until the guest OS 60 is activated. The alternative driver 32 corresponds to an alternative control unit.

The main storage device 12 includes virtual storage regions 203, 204. Note that each driver generally has a driver-specific storage region called driver structure, and operates based on the driver structure. As depicted in FIG. 2, the main storage device 12 of the present embodiment has an alternative driver structure 201 in the virtual storage region 203 for the host OS 30, and a video driver structure 202 in the virtual storage region 204 for the guest OS 60. The alternative driver structure 201 corresponds to a storage unit.

For example, the alternative driver 32 functions, at the time of activation of the information processing apparatus 100, to perform initialization processing of the video hardware 21 substitutively until the host OS 30 is activated and the video driver 62 in the guest OS 60 is activated. The alternative driver 32 then stores contents of the initialization processing performed substitutively in the alternative driver structure 201 (storage unit).

When the video driver 62 is activated, the video driver 62 refers to the alternative driver structure 201, and succeeds the contents of the initialization processing performed by the alternative driver 32. Thus, the video hardware 21 can be initialized and used before the video driver 62 of the guest OS 60 is activated.

Moreover, for example, the alternative driver 32 functions, at the time of recovery of the information processing apparatus 100 from an energy-saving mode, to perform recovery processing to recover from the energy-saving mode of the video hardware 21 substitutively, until the host OS 30 is activated (recovers) and the video driver 62 of the guest OS 60 is activated (recovers). The alternative driver 32 then stores contents of the recovery processing performed substitutively in the alternative driver structure 201 (storage unit).

When the video driver 62 is activated (recovers), the video driver 62 refers to the alternative driver structure 201, and succeeds the contents of the recovery processing performed by the alternative driver 32. Thus, the video hardware 21 can be made to recover and used before the video driver 62 of the guest OS 60 is activated.

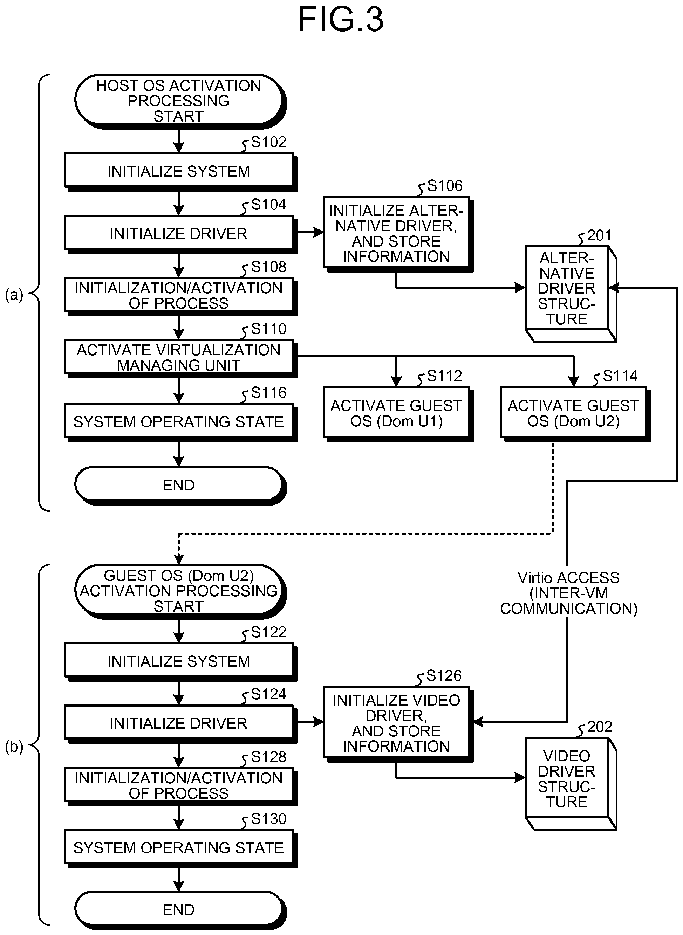

Next, activation processing by the information processing apparatus 100 of the present embodiment is explained. FIG. 3 is a flowchart depicting a flow of the activation processing in the information processing apparatus of the present embodiment. FIG. 3 indicates activation processing of the host OS 30 at (a), and indicates activation processing of the guest OS 60 at (b).

First, the activation processing of the host OS 30 is explained. When power is turned on to the information processing apparatus 100, the host OS 30 performs initialization processing of the entire system (step S102), and then performs initialization processing of each driver (step S104).

At this time, the host OS 30 performs initialization processing of the alternative driver 32 corresponding to the video hardware 21 that is a hardware module to be subjected to paravirtualization. The alternative driver 32 stores contents of the initialization processing in the alternative driver structure 201 of the alternative driver 32 (step S106).

When the initialization processing of the host OS 30 including the driver is finished, the host OS 30 performs initialization and activation of a process (step S108). In this process, the host OS 30 activates the virtualization managing unit 31 that operates the guest OSes 50 and 60 (step S110). The virtualization managing unit 31 activates the guest OSes 50 and 60 (steps S112 and S114). Thus, the system of the host OS 30 is turned into an operating state (step S116).

Next, activation processing of the guest OS 60 is explained. When the guest OS 60 is activated, the guest OS 60 performs initialization processing of a system as a virtualization OS (step S122), and then performs initialization processing of the driver (step S124).

At this time, when the video driver 62 which is a pass-through driver, is initialized, the video driver 62 accesses the alternative driver structure 201 of the alternative driver 32 of the host OS 30 through the inter-VM communication by the Virtio 61, and succeeds the contents of the initialization processing of the video hardware 21. The video driver 62 stores the succeeded contents of the initialization processing of the video hardware 21 in the video driver structure 202 of the video driver 62 (step S126).

When the initialization processing of the guest OS 60 including the driver is finished, the guest OS 60 performs initialization/activation of a process (step S128). Thus, the system of the guest OS 60 is turned into an operating state (step S130).

Although a means to access the alternative driver structure 201 of the alternative driver 32 in the inter-VM communication by the Virtios 51 and 61 is generally not provided, by providing a communication driver as a backend driver of the host OS 30, the access is easily enabled.

For example, in the case of the video driver 62 of the information processing apparatus 100 of the present embodiment, by succeeding information of a video mode (resolution, refresh rate, and/or the like), re-initialization of a video chip becomes unnecessary. As described, by performing the initialization processing of the video hardware 21 by the alternative driver 32 at activation, the initialization is performed before activation of a pass-through driver and the time required for initialization processing of hardware can be seemingly eliminated.

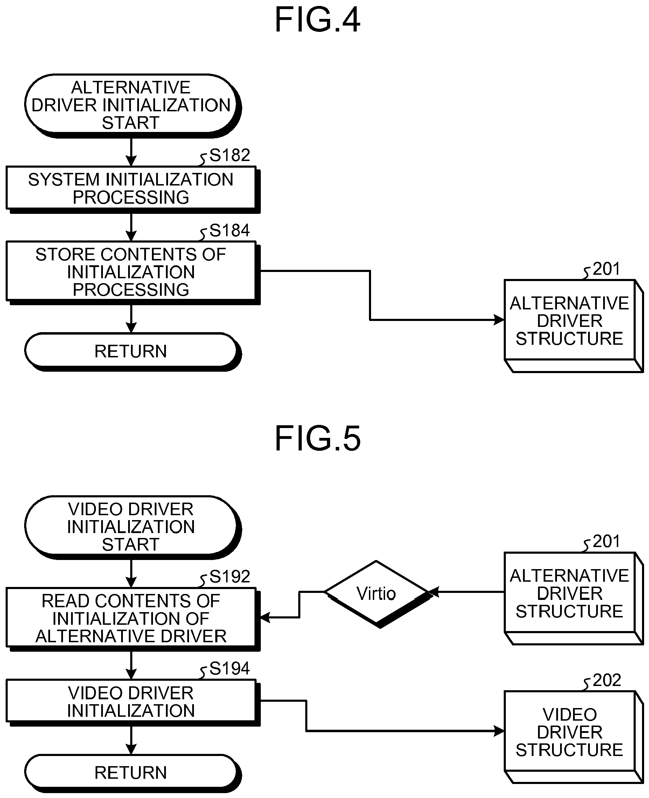

Next, the initialization processing at step S106 in FIG. 3 is explained in detail. FIG. 4 is a flowchart depicting a flow of the initialization processing of the alternative driver at the time of activation of the information processing apparatus of the present embodiment.

When the initialization processing of the system is performed by the host OS 30 (step S182), the alternative driver 32 corresponding to the video hardware 21 stores contents of the initialization processing in the alternative driver structure 201 (step S184).

This alternative driver 32 is a driver having only functions of performing initialization processing and energy-saving recovery processing, and is designed to return an error to all other system calls such as OPEN/CLOSE.

Furthermore, although initialization of a device is performed as the initialization processing, as for processing requiring relatively long time, completion is not waited. That is, for example, when activation over several 100 milliseconds (ms) is performed, for example, due to settling time of a transmission circuit, by only triggering the initialization processing and causing the pass-through driver to wait the completion, a waiting time for hardware initialization and a time required for activation of the guest OS 60 can be parallelized and an overall waiting time can be shorten.

Next, the initialization processing at step S126 in FIG. 3 is explained in detail. FIG. 5 is a flowchart depicting a flow of the initialization processing of the video driver at the time of activation of the information processing apparatus of the present embodiment.

First, the video driver 62 reads the contents of the initialization processing from the alternative driver structure 201 through the Virtio 61 (step S192). This part is dependent on implementation of each driver. In the case of the video driver 62, for example, information on resolution setting, a refresh rate, a position in a video memory currently used, and the like are the contents of the initialization processing.

By succeeding the information (contents of initialization), the initialization of the video driver 62 is done without initializing the device (step S194), and the succeeded contents is stored in the video driver structure 202.

Moreover, when the alternative driver 32 has triggered initialization of hardware, completion of the initialization is confirmed, or waited if not completed yet.

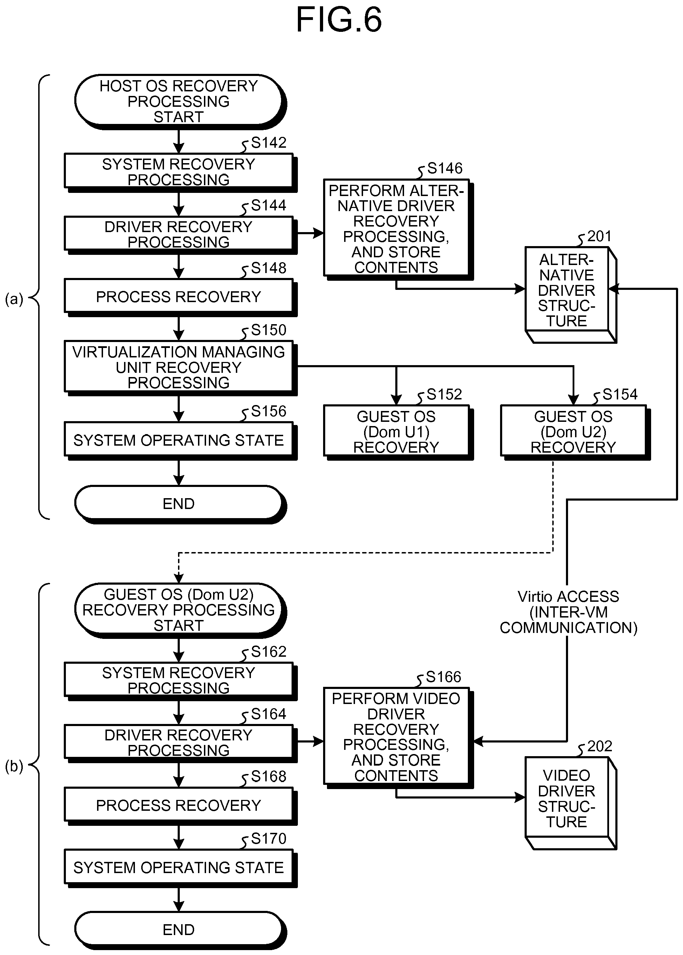

Next, the energy-saving recovery processing by the information processing apparatus 100 of the present embodiment is explained. FIG. 6 is a flowchart depicting a flow of the energy-saving recovery processing in the information processing apparatus of the present embodiment. FIG. 6 indicates energy-saving recovery processing of the host OS 30 at (a), and indicates energy-saving recovery processing of the guest OS 60 at (b).

When the information processing apparatus 100 is to be recovered from the energy-saving mode, a device that is turned off as a peripheral circuit is recovered to the original state before transition to the energy-saving mode. Therefore, recovery processing including initialization of the device is necessary.

First, the energy-saving recovery processing of the host OS 30 is explained. Similarly to the case of activation, when the recovery processing of the information processing apparatus 100 is started, the host OS performs recovery processing of the entire system (step S142). Thereafter, a recovery processing routine of each driver is invoked, and recovery processing of the driver is performed (step S144).

At this time, to the host OS 30, a recovery processing routine for the alternative driver 32 is also invoked, and the host OS 30 performs the recovery processing of the alternative driver 32. The alternative driver 32 stores contents of the processing for initialization in the alternative driver structure 201 of the alternative driver 32 (step S146).

When the recovery processing of the host OS 30 including the driver is finished, the host OS 30 performs recovery of a process (step S148). In this process, the host OS 30 recovers the virtualization managing unit 31 that operates the guest OSes 50 and 60 (step S150). The virtualization managing unit 31 recovers the guest OSes 50 and 60 (steps S152 and S154). Thus, the system of the host OS 30 is turned into an operating state (step S156).

Next, the recovery processing of the guest OS 60 is explained. When the guest OS 60 is recovered, the guest OS 60 performs recovery processing of the system as a virtualization OS (step S162). Thereafter, a recovery processing routine of each driver is invoked, and recovery processing of the driver is performed (step S164).

At this time, a recovery processing routine is invoked at recovery of the video driver 62 which is a pass-through driver, and the video driver 62 accesses the alternative driver structure 201 of the alternative driver 32 of the host OS 30 through the inter-VM communication by the Virtio 61, and succeeds contents of the recovery processing of the video hardware 21. The video driver 62 stores the succeeded contents of the recovery processing of the video hardware 21 in the video driver structure 202 of the video driver 62 (step S166).

When the recovery processing of the guest OS 60 including the driver is finished, the guest OS 60 performs recovery of a process (step S168). Thus, the system of the guest OS 60 is turned into an operating state (step S170).

Accordingly, unnecessary re-initialization can be avoided, and the recovery processing can be started beforehand by the alternative driver 32 without waiting for completion of activation (recovery) of the guest OS 60.

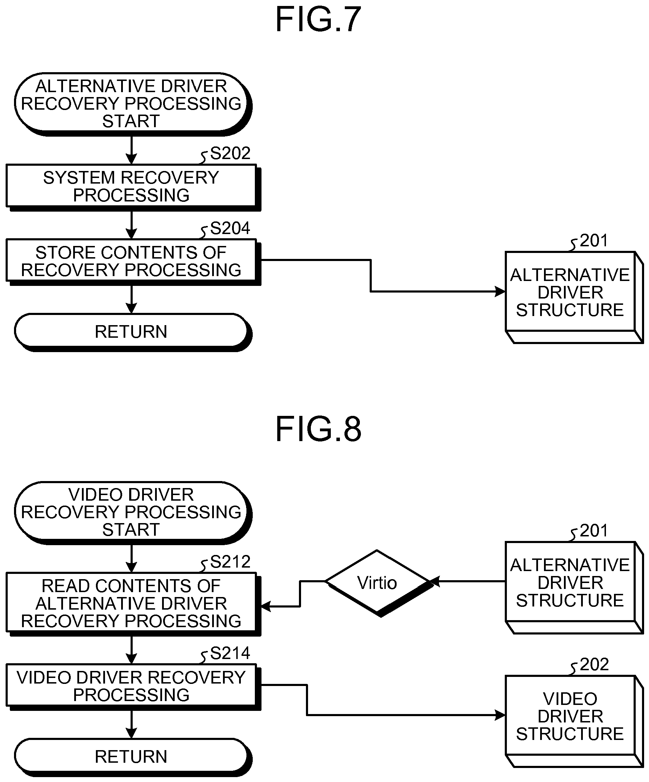

Next, the recovery processing at step S146 in FIG. 6 is explained in detail. FIG. 7 is a flowchart depicting a flow of the recovery processing of the alternative driver at the time of recovery from the energy-saving mode of the information processing apparatus of the present embodiment.

When recovery processing of the system is performed by the host OS 30 (step S202), the alternative driver 32 corresponding to the video hardware 21 stores contents of the recovery processing in the alternative driver structure 201 (step S204).

Specific contents of the recovery processing differ among individual drivers. In the case of the video driver 62, for example, information about resume processing (reconfiguration processing) of a video mode (resolution, a refresh rate), and the like are the contents of the recovery processing. The alternative driver 32 stores these setting values in the alternative driver structure 201.

Next, the recovery processing at step S166 in FIG. 6 is explained in detail. FIG. 8 is a flowchart depicting a flow of the recovery processing of the video driver at the time of recovery of the information processing apparatus of the present embodiment from the energy-saving mode.

First, the video driver 62 reads the contents of the recovery processing from the alternative driver structure 201 through the Virtio 61 (step S212). In the case of the video driver 62, for example, information about resume processing (reconfiguration processing) of a video mode (resolution, a refresh rate), and the like are the contents of the recovery processing. Based on the information, the pass-through driver (the video driver 62) performs necessary recovery processing.

By succeeding the information (contents of recovery processing), the recovery processing of the video driver 62 is done without performing recovery processing of the device (step S214), and the succeeded contents is stored in the video driver structure 202.

As described, the paravirtualized information processing apparatus 100 of the present embodiment has, in the host OS 30, the alternative driver 32 corresponding to the video hardware 21 that is directly controlled without having the host OS 30 in between (pass through). This alternative driver 32 functions, at the time of activation or recovery from the energy-saving mode of the information processing apparatus 100, until the video driver 62 which is a pass-through driver, is activated (recovered). Moreover, when the video driver 62 is activated (recovered) after the alternative driver 32 performs the initialization processing or the recovery processing of the video hardware 21, the video driver 62 succeeds the contents of the processing. Thus, the video driver 62 can use the video hardware 21 without performing the initialization processing or recovery processing again, and therefore, overhead can be avoided and the processing load can be suppressed.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. An image processing apparatus comprising:
a first processing unit configured to operate in a virtual environment;
a second processing unit configured to cause the first processing unit to operate;
a direct control unit configured to be made to operate by the first processing unit, and configured to directly control hardware without having the second processing unit in between; and
an alternative control unit configured to be made to operate by the second processing unit, and configured to substitutively perform, before the direct control unit is activated, predetermined processing that is supposed to be performed by the direct control unit, wherein
the direct control unit is configured to succeed, after activated, contents of the predetermined processing that has been performed by the alternative control unit.

2. The image processing apparatus according to claim 1, wherein
the alternative control unit stores the contents of the predetermined processing performed substitutively, in a storage unit; and
the direct control unit refers to the storage unit and succeeds the contents of the performed predetermined processing, after activation.

3. The image processing apparatus according to claim 1 or 2, wherein
The predetermined processing is initialization processing of the hardware, the initialization processing being supposed to be performed by the direct control unit.

4. The image processing apparatus according to claim 1 or 2, wherein
the predetermined processing is recovery processing to recover from an energy-saving mode, the recovery processing being supposed to be performed by the direct control unit.
